# EUROPÄISCHE PATENTSCHRIFT

(11) **EP 0 867 465 B1**
(45) Veröffentlichungstag und Bekanntmachung des Hinweises auf die Patenterteilung: **14.06.2000**
(21) Anmeldenummer: 98104644.4
(22) Anmeldetag: 14.03.1998
(51) Int. Cl.: C08J 9/00, C08G 77/50

(54) **Verwendung von Blockcopolymeren mit verknüpften Siloxanblöcken bei der Herstellung von Polyrethanschaumstoffen**
Use of block copolymers having linked siloxane blocks for the preparation of polyrethane foams
Utilisation de copolymères séquencés ayant de séquences de siloxanes liés pour la préparation de mousses de polyréthane

(30) Priorität: 29.03.1997 DE 19713277
(43) Veröffentlichungstag der Anmeldung: 30.09.1998
(73) Patentinhaber: Goldschmidt AG, 45127 Essen (DE)
(72) Erfinder: Burkhart, Georg, Dr., 45239 Essen (DE); Langenhagen, Rolf-Dieter, 45529 Hattingen (DE); Weier, Andreas, Dr., 45289 Essen (DE)

(56) Entgegenhaltungen:
- US-A- 4 853 474
- US-A- 5 357 018

## Beschreibung

Die Erfindung betrifft die Verwendung von Blockcopolymeren mit verknüpften Siloxanblöcken als Additiv bei der Herstellung von Polyurethanschaumstoffen.

Bei der Herstellung von Polyurethanschaumstoffen werden dem Gemisch der Rohstoffe Polysiloxan-Polyoxyalkylen-Blockmischpolymerisate zugesetzt, welche vielfältige Aufgaben haben und u. a. die Ausbildung eines gleichmäßigen Porengefüges ermöglichen und den gebildeten Schaum bis zur Beendigung der Reaktion stabilisieren. Jedoch sind nicht alle Polysiloxan-Polyoxyalkylen-Blockmischpolymerisate in gleicher Weise geeignet. Um als Polyurethan-Schaumstabilisatoren brauchbar zu sein, müssen die Polyoxyalkylenblöcke und der Polysiloxanblock der Blockmischpolymerisate in einem ausgewogenen Verhältnis vorliegen, wobei auch der Aufbau der beiden Blöcke von großer Bedeutung ist. Es gibt dabei für den Aufbau eines möglichst wirksamen Schaumstabilisators eine Vielzahl von Variablen sowohl für den Polyoxyalkylenblock wie für den Polysiloxanblock:

Der Polyoxyalkylenblock kann aus verschiedenen Oxyalkyleneinheiten, vornehmlich aus Oxyethylen-, Oxypropylen- und Oxybutyleneinheiten zusammengesetzt sein. Dabei können das Gewichtsverhältnis dieser Einheiten zueinander, ihre Sequenz sowie das Molgewicht des Polyoxyalkylenblockes variiert werden. Von Bedeutung ist auch die Endgruppe des Polyoxyalkylenblockes, die in bezug auf die Polyurethanbildung reaktiv (z. B. OH-Gruppe) oder inert (z. B. Alkoxy-Gruppe) sein kann. Der Polyoxyalkylenblock kann mit dem Polysiloxanblock durch eine hydrolytisch stabile C-Si-Bindung oder die hydrolytisch weniger stabile C-O-Si-Bindung verknüpft sein. Dabei können auch unterschiedliche Polyoxyalkylenblöcke an den Polysiloxanblock gebunden sein.

Der Polysiloxanblock kann in bezug auf Art und Anteil der Si-Einheiten variiert werden. Der Siloxanblock kann geradkettig oder verzweigt sein und unterschiedliches Molekulargewicht aufweisen. Die Polyoxyalkylenblöcke können end- und/oder seitenständig an den Polysiloxanblock gebunden sein.

Vorhersagen über Wirksamkeit eines Polysiloxan-Polyoxyalkylen-Blockmischpolymerisates als Schaumstabilisator können nur in gewissem Maße gegeben werden. Der Fachmann ist deshalb genötigt, die Variationsmöglichkeit weitgehend empirisch zu erproben. In Anbetracht der großen, nahezu unübersehbaren Anzahl der Variationsmöglichkeiten stellt die Auffindung im Sinne der Polyurethanherstellung besonders wirksamer spezieller Strukturparameter und entsprechender Blockmischpolymerisate eine fortschrittsraffende und somit erfinderische Leistung dar.

Polysiloxan-Polyoxyalkylen-Blockmischpolymerisate, welche im durchschnittlichen Molekül unterschiedliche Polyoxyalkylenreste aufweisen, sind bereits wiederholt beschrieben worden. Aus der großen Anzahl entsprechender Veröffentlichungen sollen stellvertretend die folgenden Schriften genannt werden:

DE-C-15 70 647: Chlorpolysiloxanylsulfate werden mit Gemischen von Alkylenoxid-Addukten umgesetzt, welche aus
- 50 bis 96 OH-Äquivalentprozent: Polyalkylenglykolmonoethern, die aus Ethylenoxid- und Propylenoxideinheiten bestehen und einen Gehalt von 40 bis 70 Gew.-% Oxypropyleneinheiten und ein Molgewicht von 1000 bis 3000 aufweisen, deren Hydroxylgruppen vorzugsweise sekundär sind, und
- 5 bis 50 OH-Äquivalentprozent: Alkylenoxid-Addukten mehrwertiger Hydroxylverbindungen eines Molgewichtes von 130 bis 3500, deren Polyalkylenglykolkomponente aus Ethylenoxid- und/oder Propylenoxideinheiten bestehen und die ein OH-Äquivalentgewicht bis zu 1750 haben und deren Hydroxylgruppen vorzugsweise sekundär sind, bestehen und
wobei die Mengenverhältnisse so gewählt sind, daß auf ein Säureäquivalent des Chlorpolysiloxanylsulfates höchstens 1,4, vorzugsweise 1,05 bis 1,2 OH-Äquivalente kommen.

DE-C-16 94 366: Es werden als Schaumstabilisatoren solche Polysiloxan-Polyoxyalkylen-Blockmischpolymerisate verwendet, deren Polysiloxanblock in an sich bekannter Weise aufgebaut ist, deren Polyoxyalkylenblock jedoch aus
- 25 bis 70 Gew.-%: eines Polyoxyalkylens mit einem durchschnittlichen Molekulargewicht von 1600 bis 4000 und einem Ethylenoxidgehalt von 20 bis 100 Gew.-%, Rest Propylenoxid und gegebenenfalls höhere Alkylenoxide, und
- 30 bis 75 Gew.-%: eines Polyoxyalkylens mit einem durchschnittlichen Molekulargewicht von 400 bis 1200 und einem Ethylenoxidgehalt von 65 bis 100 Gew.-%, Rest Propylenoxid und gegebenenfalls höhere Alkylenoxide, besteht.

DE-A-25 41 865: Die Polysiloxan-Polyoxyalkylen-Blockmischpolymerisate sind bezüglich ihrer Polyoxyalkylenblöcke so definiert, daß der eine Polyoxyalkylenblock ein mittleres Molgewicht von 900 bis 1300 hat und zu 30 bis 55 Gew.-% aus Ethylenoxid, Rest Propylenoxid, und der andere Polyoxyalkylenblock ein mittleres Molgewicht von 3800 bis 5000 hat und zu 30 bis 50 Gew.-% aus Ethylenoxid, Rest Propylenoxid, besteht.

EP-A-0 275 563: Das in dieser Patentanmeldung beschriebene Blockmischpolymerisat umfaßt drei verschiedene Polyoxyalkylenblöcke, nämlich einen Block, welcher 20 bis 60 Gew.-% Oxyethyleneinheiten enthält, bei einem Molgewicht von 3000 bis 5000, einen weiteren Block mit 20 bis 60 Gew.-% Oxyethyleneinheiten und einem Molgewicht von 800 bis 2900 und einen dritten Block nur aus Polyoxypropyleneinheiten und einem Molgewicht von 130 bis 1200.

Trotz der beschriebenen Breite an zugänglichen Produkten, die nach dem Stand der Technik herstellbar sind, gibt es immer noch weiteren Optimierungsbedarf für die Herstellung von Additiven zur Produktion von Polyurethanschäumen. Dieser Optimierungsbedarf resultiert zum einen aus der Vielzahl der möglichen Polyurethanschaumtypen, z. B. Weichschaum, Hartschaum, Esterschaum, Kaltschaum, Verpackungsschaum, flammlaminierbarer Schaum, Formschaum, Integralschaum etc., zum anderen auch aus neueren Verschäumungstechniken wie Variable Pressure Foaming, Verschäumungen mit unter Druck stehenden inerten Gasen oder auch 'Forced Cooling Processes' (z. B. ENVIRO-CURE, Fa. CRAIN INDUSTRIES).

Erstaunlicherweise wurde nun gefunden, daß die Verwendung von unterbrochenen Siloxanblöcken als Polyurethanschaumstabilisatoren eine unerwartete Kombination hervorragender Eigenschaften bewirkt, wenn die Siloxanblöcke auch seitenständig modifiziert sind. Derartige Strukturen erhält man durch Verknüpfung (Kopplung) von Siloxansegmenten mittels Di- oder Polyolefinen, die selbst gegebenenfalls verzweigt sein und Heteroatome enthalten können. Besonders die seitenständige Modifizierung der Siloxanketten bietet die Möglichkeit, nicht nur chemisch sehr unterschiedliche Kopplungsagenzien für die hydrolysestabile SiC-Verknüpfung der verwendeten Siloxanketten einzusetzen, sondern auch das Eigenschaftsprofil in überragender Weise den benötigten Anforderungen anzupassen. Besonders dieser Punkt unterscheidet die hier vorgestellte Erfindung deutlich von z. B. der japanischen Offenlegungsschrift 7-90102, gemäß der zur Herstellung von Polyurethanschaum lineare Siloxan-Polyoxyalkylen-(AB)ₙ-Blockcopolymere vorgeschlagen werden. Dort ist besonders auf das zu verwendende Verhältnis der Molmassen, und damit Polaritäten, zwischen Siloxanrücken und Kopplungssubstanz hingewiesen, während erstaunlicherweise bei der vorliegenden Erfindung wegen der deutlich anderen Siloxangrundstruktur sowohl derartig unpolare Kopplungssubstanzen, wie z. B. 1,7-Octadien als auch deutlich polarere Strukturen, ja selbst OH-gruppenhaltige Moleküle, wie z. B. Trimethylolpropandiallylether mit hervorragendem Ergebnis eingesetzt werden können.

Diese Verbesserung der Eigenschaften wird erreicht, wenn man erfindungsgemäß bei der Herstellung von Polyurethanschaumstoffen als Additiv Blockcopolymere einsetzt, die der folgenden allgemeinen durchschnittlichen Formel entsprechen: 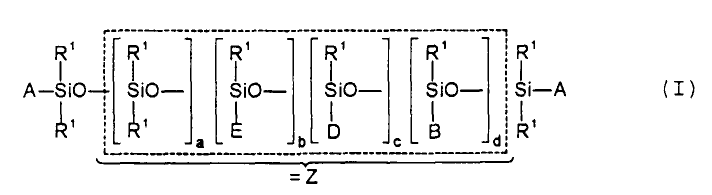 wobei die Reste und Indices folgende Bedeutungen haben: A = Rest R¹, Rest E oder ein Rest der Formel IIa 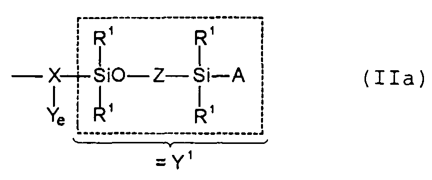 oder ein Rest der Formel IIb 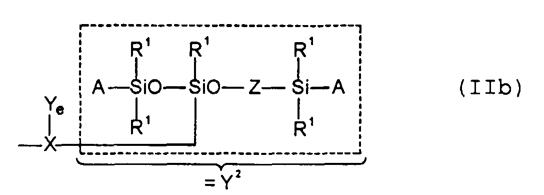
- B =: Rest der Formel IIa oder IIb,
- Y =: Rest Y¹ oder Rest Y²,
- D =: Rest der Formel 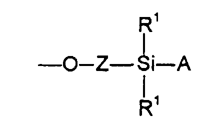
- R¹ =: ein gegebenenfalls substituierter Alkylrest mit 1 bis 30 Kohlenstoffatomen, ein gegebenenfalls substituierter Arylrest oder ein gegebenenfalls substituierter Alkarylrest, wobei jedoch mindestens 80 % der Reste R¹ Methyl-gruppen sind,
- a: hat einen Wert von 3 bis 200,
- b: hat einen Wert von 0 bis 50,
- c: hat einen Wert von 0 bis 10,
- d: hat einen Wert von 0 bis 5 und
- e: hat einen Wert von 0 bis 4,
wobei die Werte für a, b, c, d und e in den einzelnen Segmenten A, B, D und Z unterschiedlich sein können und mindestens ein Wert b oder c ungleich 0 ist,
- E =: ein Rest der allgemeinen Formel

-R²_{f}-O-(CₘH₂ₘO-)ₙR³

wobei
R² ein zweiwertiger Alkylenrest, der auch verzweigt sein kann, ist und
f einen Wert von 0 oder 1,
m einen Wert von durchschnittlich 2 bis 4,
n einen Wert von 0 bis 100 hat und
R³ ein Wasserstoffrest, ein gegebenenfalls substituierter Alkylrest mit 1 bis 6 Kohlenstoffatomen, ein Acylrest oder ein -O-CO-NH-R⁴-Rest, bei dem R⁴ ein gegebenenfalls substituierter Alkyl- oder Arylrest ist, ist,
- X =: ein mehrwertiger organischer Rest.

Dabei können auch verschiedene Polyether in Kombination eingesetzt werden, wie z. B. in der DE-C-42 29 402 beschrieben ist. Die Polyether können sich z. B. unterscheiden in ihrer Molmasse, ihrer Endgruppe R³, den Anteilen der verwendeten Monomeren, der Art der Monomeren etc.

X ist ein mehrwertiger organischer Rest (Wertigkeit = 2 + e). Der Rest X wird durch die Reaktion von Verbindungen, die 2 + e hydrosilylierbare olefinische Doppelbindungen pro Molekül enthalten, mit SiH-Gruppen gebildet. Pro Molekül der erfindungsgemäß zu verwendenden Substanzen muß mindestens ein Rest X enthalten sein. Das durch Verknüpfung erhaltene Molekül sollte ≤ 600 Si-Atome enthalten.

Für den Fachmann ist offensichtlich, daß die erhaltenen Verbindungen in Form eines Gemisches vorliegen, dessen Verteilung im wesentlichen durch statistische Gesetze bestimmt wird. Die Werte für a, b, c, d, n und die Anzahl der X-Reste pro Molekül entsprechen daher Mittelwerten.

Ein geringer Anteil der Reste R¹ kann ein Wasserstoffrest sein, nämlich dann, wenn das eingesetzte Wasserstoffsiloxan nicht vollständig mit den Allylpolyethern und den organischen Verbindungen, die das Verbrückungsglied X bilden, abreagiert.
- X: ist ein Verbrückungsglied der Formel 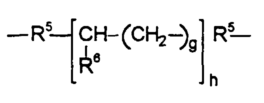 wobei
- R⁵: ein zweiwertiger Alkylenrest, der auch verzweigt sein kann, und
- R⁶: ein Wasserstoffrest, ein gegebenenfalls verzweigter Alkylrest oder der Rest R⁵ ist und
- g: einen Wert von 0 bis 5 und
- h: einen Wert von 0 bis 3 haben,
oder der Formel 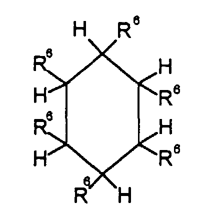 wobei R⁶ die Bedeutung wie zuvor hat,
jedoch mindestens zwei der Reste R⁶ die Reste R⁵ sind,
oder der Formel 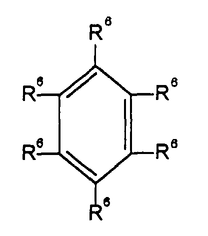 wobei R⁶ die Bedeutung wie zuvor hat,
jedoch mindestens zwei der Reste R⁶ die Reste R⁵ sind,
oder der Formel

-R⁵-O-(C_{m'}H_{2m'}O-)_{n'}R⁵-

wobei
- R⁵: die Bedeutung wie zuvor,
- m': einen Wert von 2 bis 4 und
- n': einen Wert von 0 bis 20 haben,
oder der Formel

-R⁵-(CO-)ₖOCH₂-(CR⁷₂-)ᵢCH₂O-(CO-)ₖR⁵-

wobei
- R⁵: die Bedeutung wie zuvor hat und
- R⁷: ein Wasserstoffrest, ein Alkylrest, ein Hydroxyalkylrest oder der Rest -CH₂O-(CO-)ₖR⁵- ist und
- i: einen Wert von 0 bis 10 und
- k: einen Wert von 0 oder 1 haben,
oder der Formel 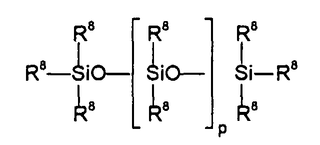 wobei
- R⁸: ein Alkylrest, ein substituierter Alkylrest, ein Phenylrest oder der Rest R⁵ ist, jedoch mindestens zwei der Reste R⁸ die Reste R⁵ sind, und
- p: einen Wert von 0 bis 10 hat, wobei der Wert von 0 bevorzugt ist.

Die Summe der R⁵-Reste pro X-Rest muß 2 + e betragen. Bevorzugt ist R⁵ der Rest -(CH₂)₂- oder -(CH₂)₃-.

Bevorzugt ist der Rest R⁸ ein Alkylrest mit 1 bis 6 Kohlenstoffatomen, besonders bevorzugt ein Methylrest.

Beispiele für Substanzen, mit denen der Rest X gebildet werden kann, sind z. B. 1,7-Octadien, Trimethylolpropandiallylether, Trimethylolpropantriallylether, Pentaerythrittriallylether, Divinylbenzol, Divinylcyclohexan, 1,4-Butandioldivinylether, Diallylpolyether und 1,3-Divinyltetramethyldisiloxan.

Im folgenden sind Beispiele der erfindungsgemäß verwendeten verknüpften Polysiloxan-Blockcopolymeren aufgeführt:

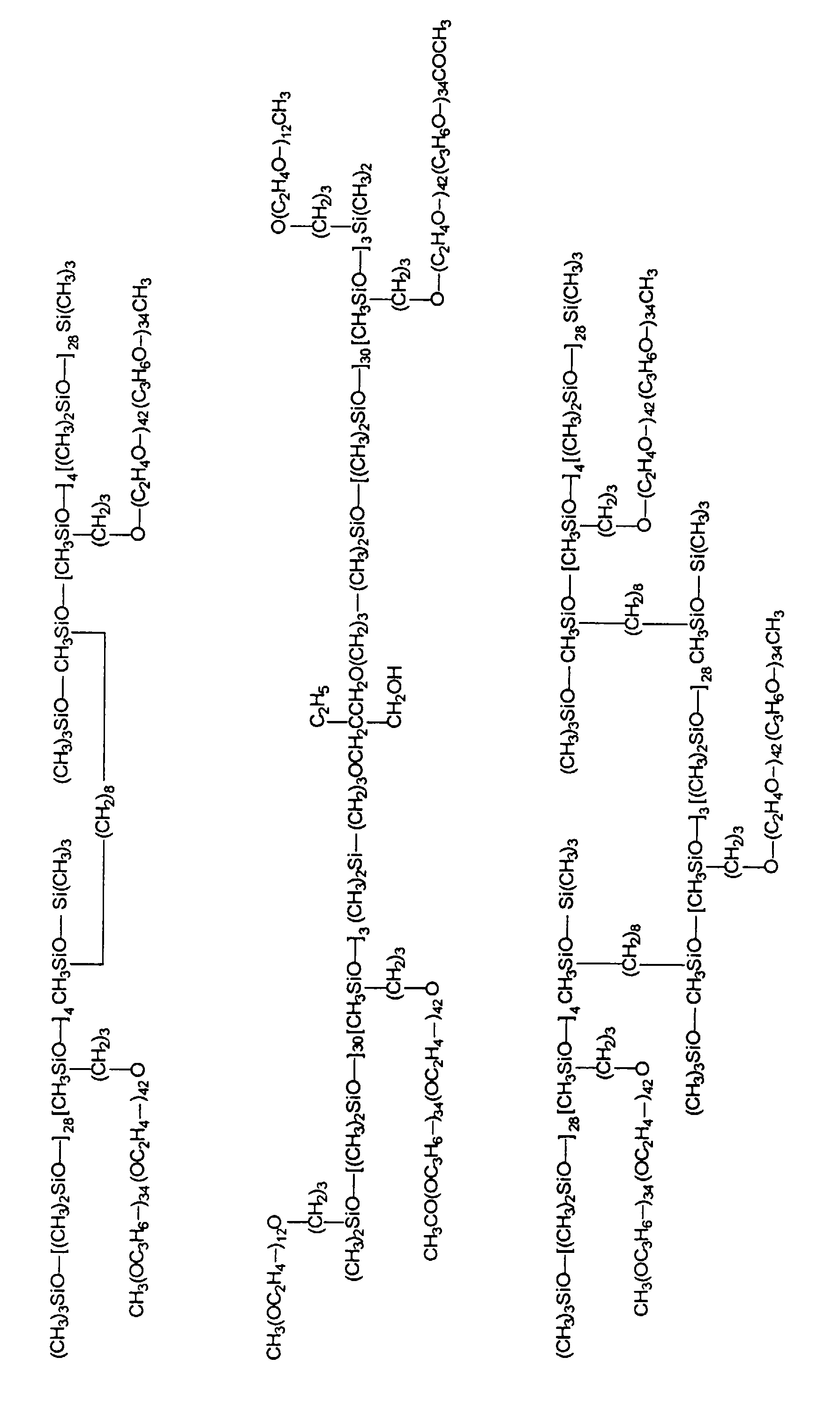

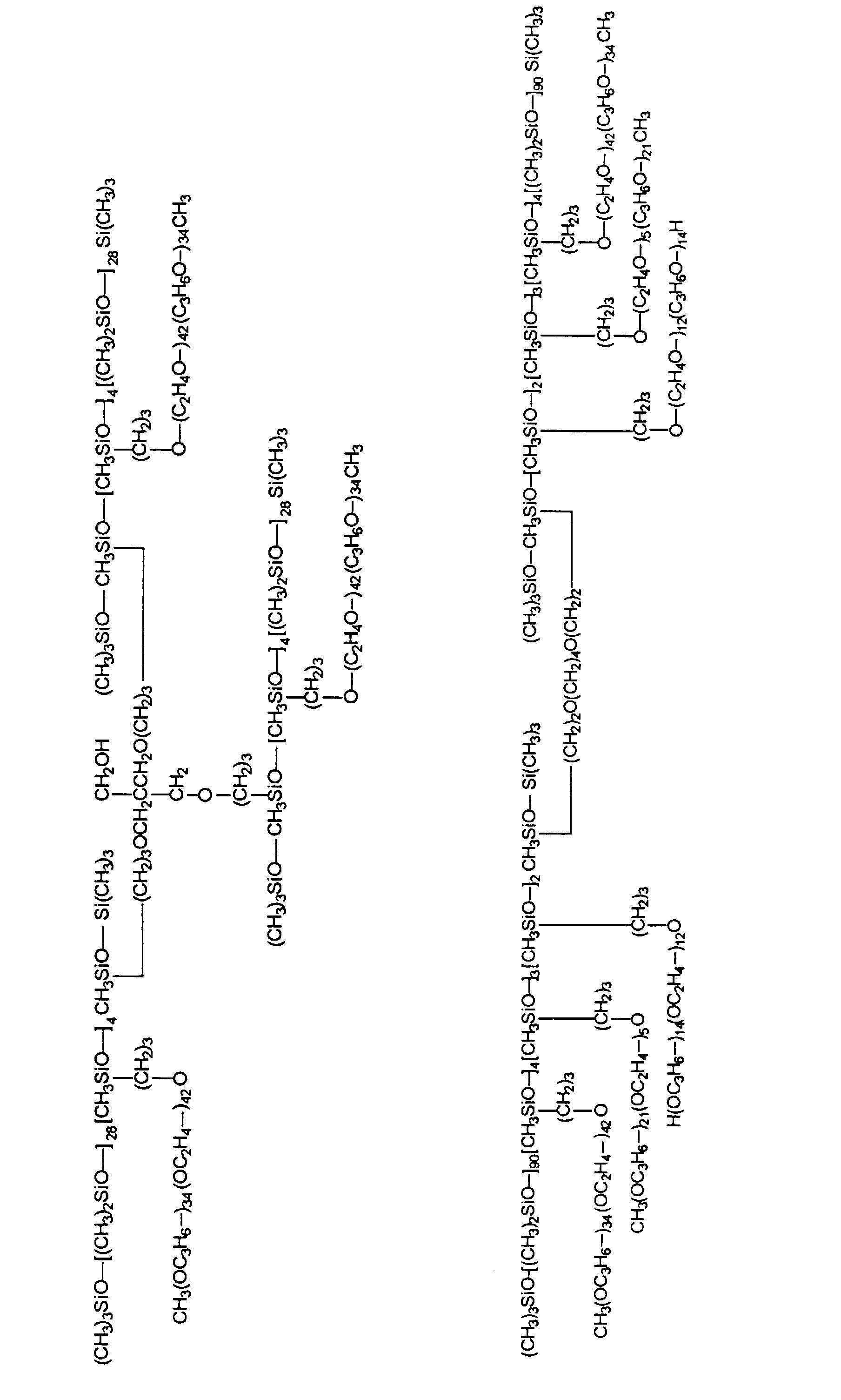

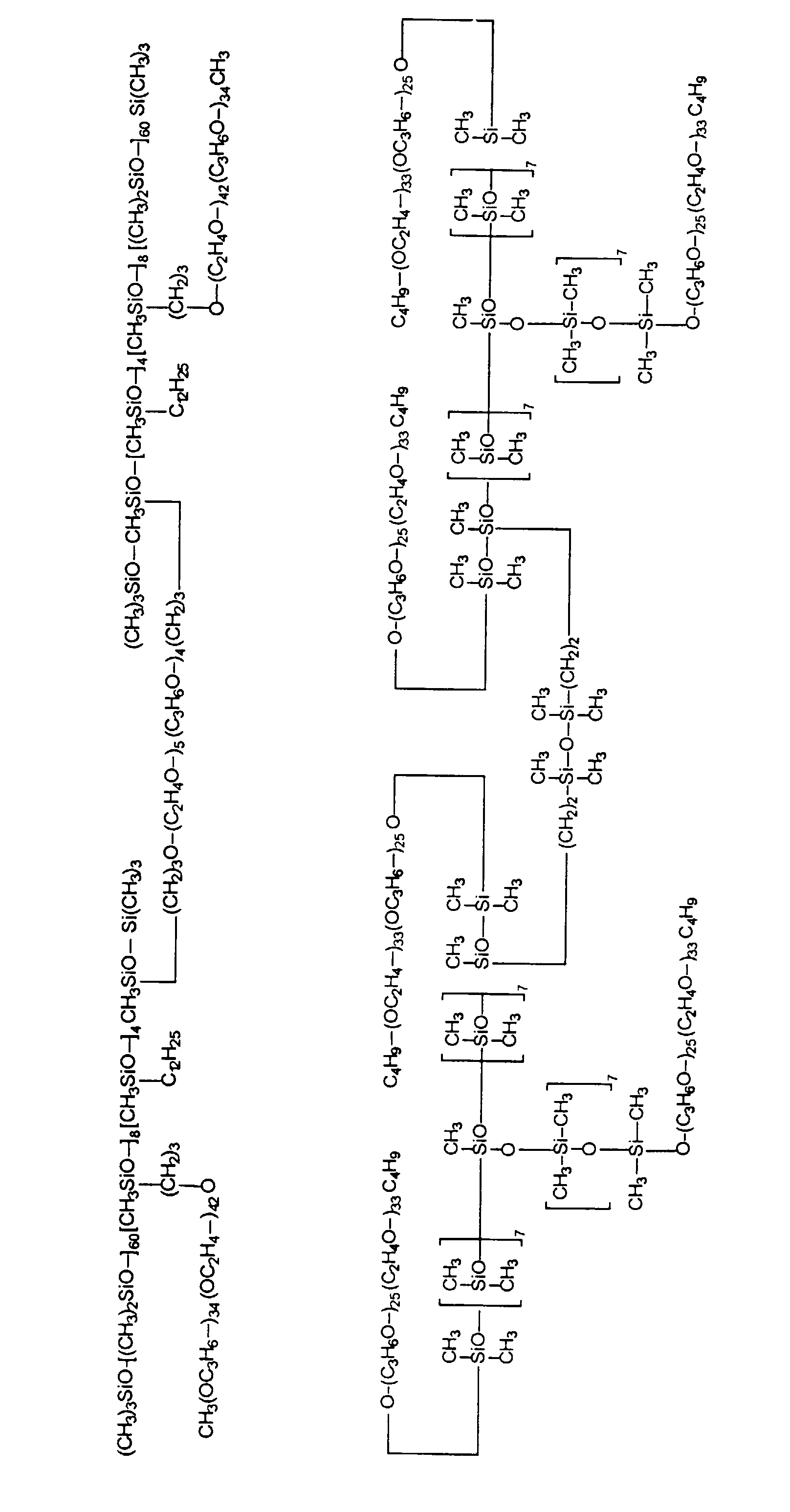

Bei den folgenden Herstellungsbeispielen werden nachstehende Verbindungen eingesetzt:

### Siloxane:

I) (CH₃)₃SiO-[(CH₃)₂SiO-]₂₈[(CH₃)HSiO-]₅Si(CH₃)₃
II) H(CH₃)₂SiO-[(CH₃)₂SiO-]₃₀[(CH₃)HSiO-]₃Si(CH₃)₂H
III) (CH₃)₃SiO-[(CH₃)₂SiO-]₅₈[(CH₃)HSiO-]₁₀Si(CH₃)₃
IV) (CH₃)₃SiO-[(CH₃)₂SiO-]₅₈[(CH₃)HSiO-]₆Si(CH₃)₃
V) H(CH₃)₂SiO-[(CH₃)₂SiO-]₁₉[(CH₃)HSiO-]₄Si(CH₃)₂H
VI) H(CH₃)₂SiO-[(CH₃)₂SiO-]₄₀[(CH₃)HSiO-]₈Si(CH₃)₂H
VII) 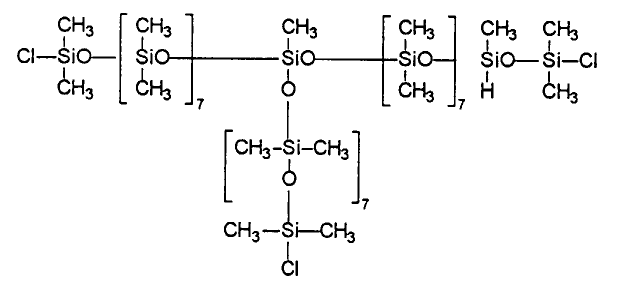
VIII)

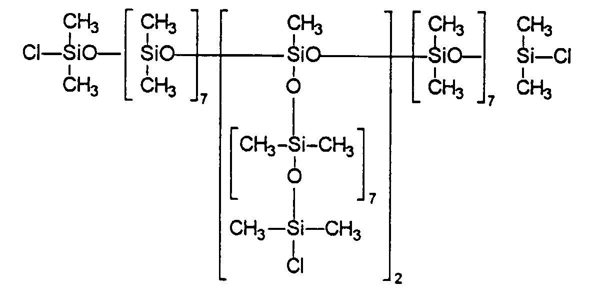

### Polyether:

a) CH₂=CH-CH₂O-(C₂H₄O-)₁₂CH₃
b) CH₂=CH-CH₂O-(C₂H₄O-)₁₁(C₃H₆O-)₁H
c) CH₂=CH-CH₂O-(C₂H₄O-)₁₂(C₃H₆O-)₉H
d) CH₂=CH-CH₂O-(C₂H₄O-)₁₆(C₃H₆O-)₁₂CH₃
e) CH₂=CH-CH₂O-(C₂H₄O-)₅(C₃H₆O-)₂₁CH₃
f) CH₂=CH-CH₂O-(C₂H₄O-)₄₂(C₃H₆O-)₃₄COCH₃
g) CH₂=CH-CH₂O-(C₂H₄O-)₄₅(C₃H₆O-)₃₄CH₃
h) CH₂=CH-CH₂O-(C₂H₄O-)₄₅(C₃H₆O-)₃₄H
i) C₄H₉O-(C₂H₄O-)₃₃(C₃H₆O-)₂₅H

### Kopplungskomponenten:

Trimethylolpropandiallylether
1,7-Octadien
1,3-Divinyltetramethyldisiloxan
Diallylpolyether k),
Formel: CH₂=CH-CH₂O-(C₂H₄O-)₅(C₃H₆O-)₅CH₂-CH=CH₂

### Herstellung der Blockcopolymeren 1 bis 16 und 19 bis 21 (siehe Tabelle 1)

In einem mit Rührer, Thermometer, Gaseinleitung und Rückflußkühler versehenen Kolben werden die Siloxane, Polyether und Kopplungskomponenten vorgelegt (Typ und Einwaage siehe Tabelle 1). Durch die Apparatur wird Stickstoff geleitet, und unter Rühren wird der Kolbeninhalt auf 105 °C aufgeheizt. Bei 105 °C wird der Ansatz mit einer 10 %igen Lösung von H₂PtCl₆ · 6H₂O in i-Propanol versetzt (ca. 0,6 g pro 1000 g Ansatz). Es setzt eine exotherme Reaktion ein. Dabei treten, abhängig von den eingesetzten Edukten, Temperaturerhöhungen von 10 bis 30 °C auf. Man läßt die Ansätze abreagieren und erreicht SiH-Umsätze von ≥ 97 % (bestimmt über in alkalischem Medium mit n-Butanol abspaltbarem Wasserstoff). Während der Reaktion wird der zunächst trübe Kolbeninhalt klar. Die Reaktionszeiten betragen in der Regel 1 bis 8 Stunden.

Die Polyether werden vorzugsweise im Überschuß eingesetzt (10 bis 40 %). Die oben beschriebene Reaktion kann auch unter Zusatz von Lösemitteln durchgeführt werden, was besonders dann vorteilhaft ist, wenn höherviskose Produkte entstehen. Dabei können Lösemittel eingesetzt werden, die nach der Reaktion abdestilliert werden können (z. B. Toluol, Xylol) oder solche, die nach der Reaktion im Endprodukt verbleiben können (z. B. Dipropylenglykol, Di- und Tripropylenglykolmono-n-butylether, Propylenglykolmonophenylether, doppelbindungsfreie Polyether).

### Herstellung von Blockcopolymer 17 (siehe Tabelle 1)

Stufe 1: In einem mit Rührer, Thermometer, Gaseinleitung und Rückflußkühler versehenen Kolben wird das Siloxan VII und das 1,7-Octadien (Einwaage siehe Tabelle) vorgelegt. Durch die Apparatur wird Stickstoff geleitet, und unter Rühren wird der Kolbeninhalt auf 105 °C aufgeheizt. Bei 105 °C wird der Ansatz mit einer 10 %igen Lösung von H₂PtCl₆ · 6H₂O in i-Propanol versetzt (ca. 0,6 g pro 1000 g Ansatz). Es setzt eine leicht exotherme Reaktion ein. Man rührt, bis der SiH-Umsatz 97 % erreicht hat.
Stufe 2: In einem weiteren Kolben, der mit Rührer, Thermometer, Gaseinleitung und Destillationsaufsatz versehenen ist, werden der Polyether i i (Einwaage siehe Tabelle 1) und 700 ml Toluol vorgelegt. Unter Stickstoffabdeckung werden 150 ml Toluol zur azeotropen Trocknung des Polyethers abdestilliert. Nach Abkühlung auf 60 °C wird der Destillationsaufsatz gegen einen Rückflußkühler ausgetauscht. Anschließend wird das in Stufe 1 erhaltene Reaktionsprodukt zu der toluolischen Polyetherlösung gegeben. Nach guter Durchmischung wird nun bei 60 °C Ammoniakgas eingeleitet, bis der Kolbeninhalt ammoniakalisch reagiert. Man läßt noch eine weitere Stunde unter schwachem Einleiten von Ammoniakgas nachreagieren. Danach wird das ausgefallene Salz abfiltriert und das Toluol bei 70 °C und 20 mbar abdestilliert.

### Herstellung von Blockcopolymer 18 (siehe Tabelle 1)

In einem Kolben, der mit Rührer, Thermometer, Gaseinleitung und Destillationsaufsatz versehenen ist, werden der Polyether i (Einwaage siehe Tabelle 1) und 700 ml Toluol vorgelegt. Unter Stickstoffabdeckung werden 150 ml Toluol zur azeotropen Trocknung des Polyethers abdestilliert. Nach Abkühlung auf 60 °C wird der Destillationsaufsatz gegen einen Rückflußkühler ausgetauscht. Anschließend wird das Siloxan VIII (Einwaage siehe Tabelle 1) zu der toluolischen Polyetherlösung gegeben. Nach guter Durchmischung wird bei 60 °C Ammoniakgas eingeleitet, bis der Kolbeninhalt ammoniakalisch reagiert. Man läßt noch eine weitere Stunde unter schwachem Einleiten von Ammoniakgas nachreagieren. Danach wird das ausgefallene Salz abfiltriert und das Toluol bei 70 °C und 20 mbar abdestilliert.

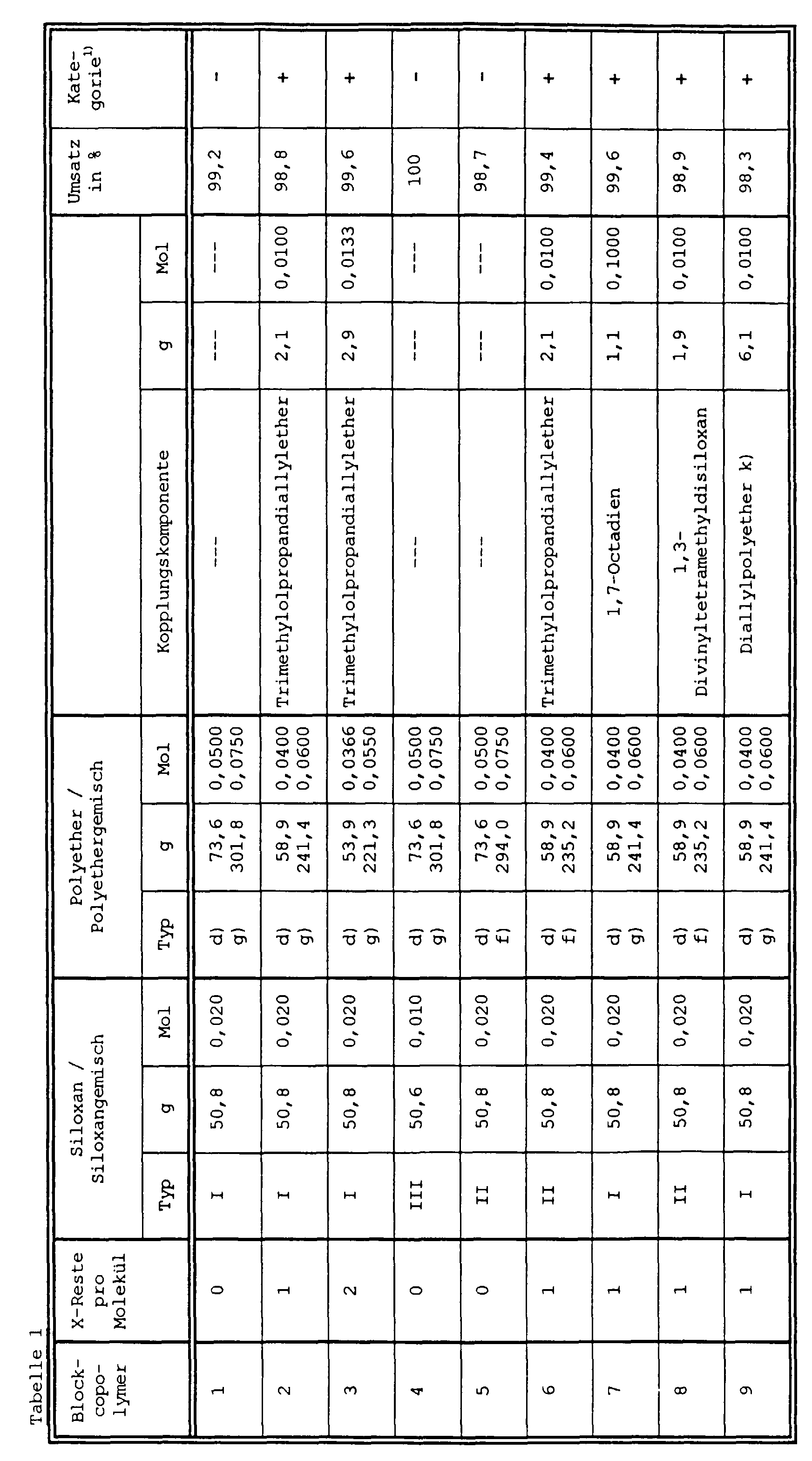

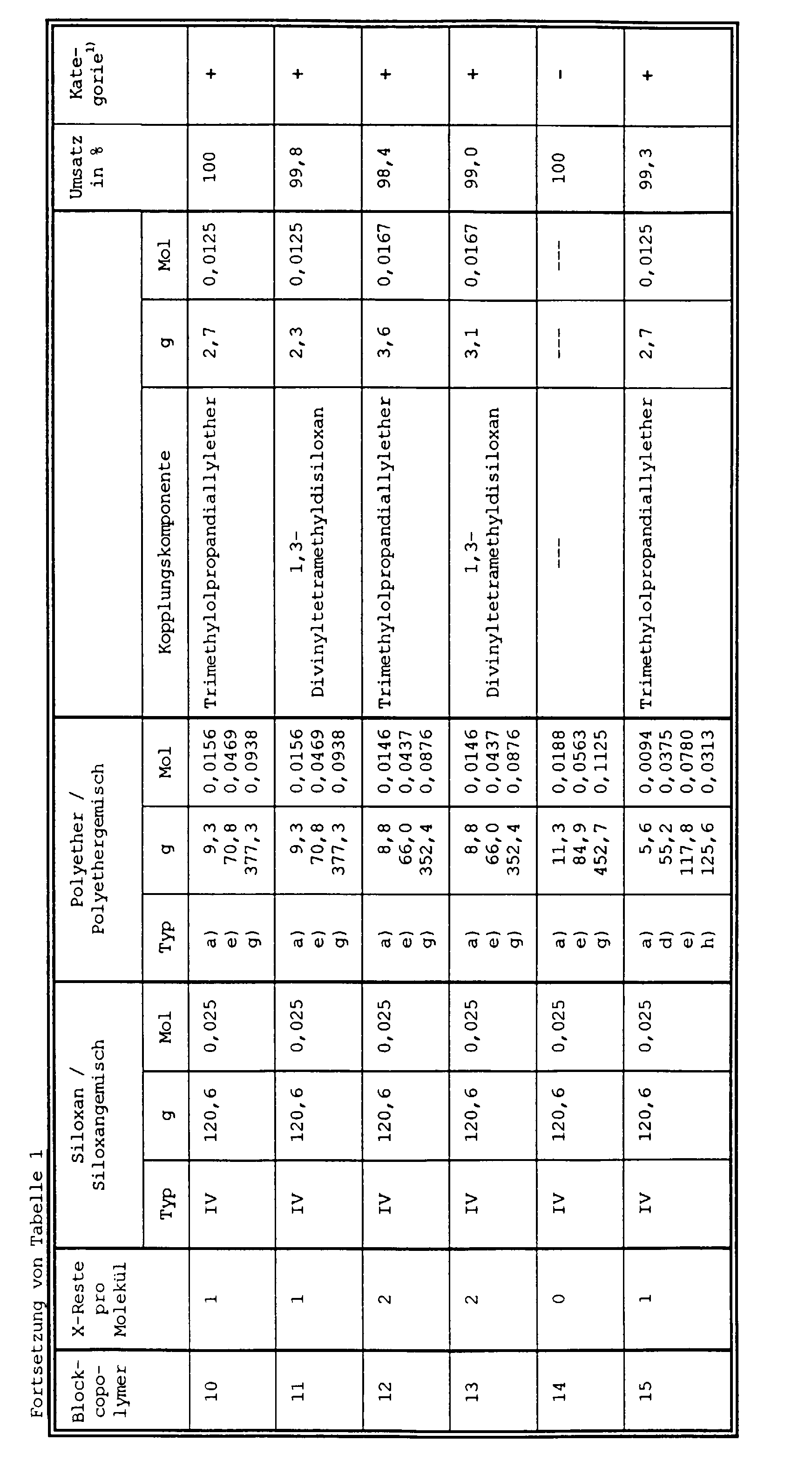

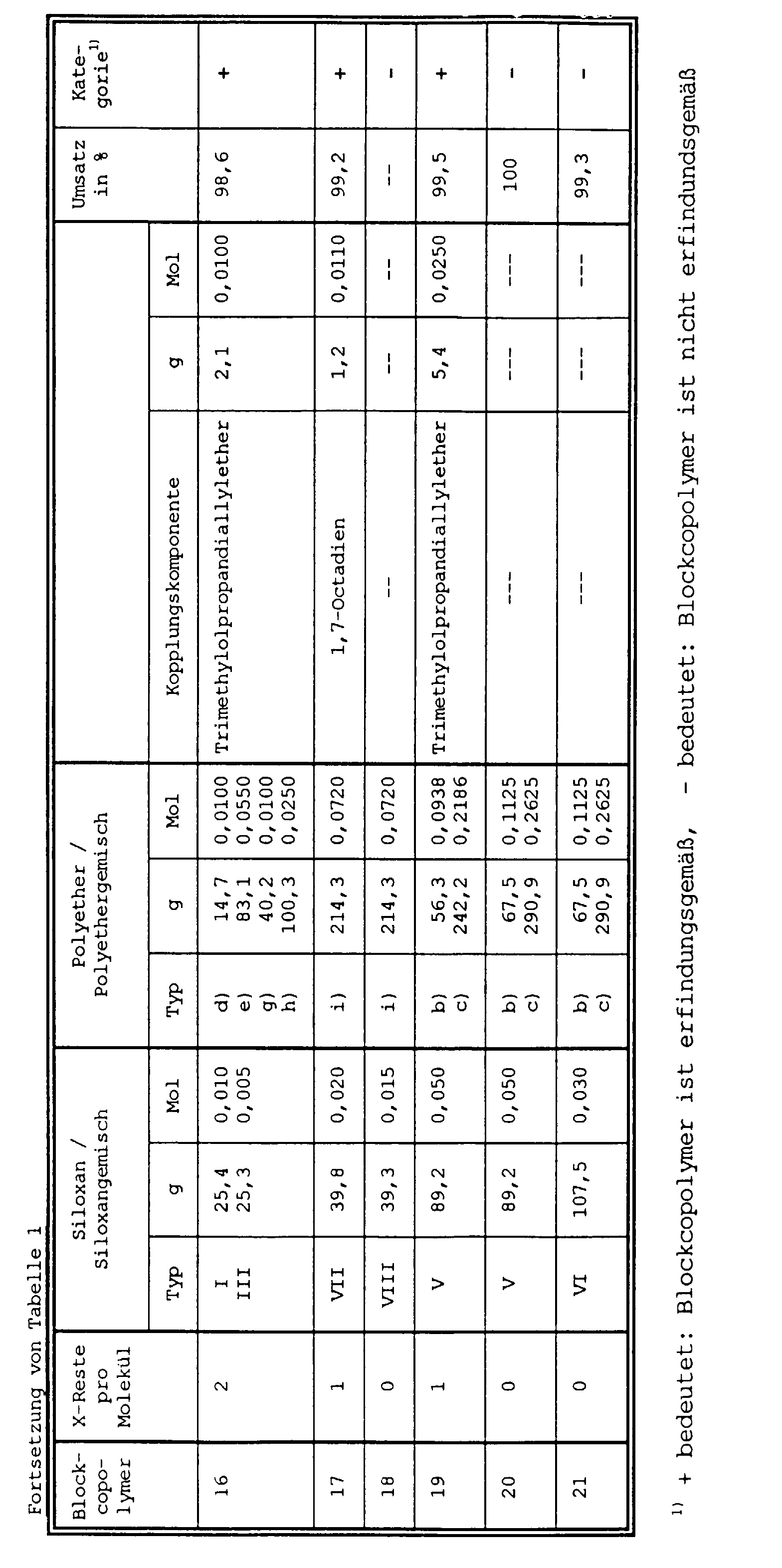

Die Blockcopolymeren 1 bis 18 werden als Additive in den Weichschaumformulierungen A und B getestet.

| | Schaumformulierung A Gew.-Teile | Schaumformulierung B Gew.-Teile |
|---|---|---|
| Polyol (OHZ: 47, 11 % EO) | 0 | 100 |
| Polyol (OHZ: 56, 0 % EO) | 100 | 0 |
| Wasser | 4,05 | 5 |
| tert. Amin | 0,2 | 0,15 |
| Zinnoctoat | 0,2 | 0,23 |
| physik. Treibmittel | 3 | 5 |
| Stabilisator | variiert | variiert |
| Isocyanat T 80 | 52,5 | 63,04 |

Bei der Verschäumung von Formulierung A werden 400 g Polyol, bei der Verschäumung von Formulierung B 300 g Polyol eingesetzt. Entsprechend werden die anderen Formulierungsbestandteile umgerechnet.

Zum Austesten des Additives als Stabilisator werden Polyol, Wasser, Amin, Zinnoctoat, Stabilisator und Treibmittel unter gutem Rühren vermischt. Nach Zugabe des Isocyanats wird mit einem Glattrührer 7 Sek. bei 3000 U/Min. gerührt und das Gemisch in einen mit Papier ausgekleideten Holzkasten (Grundfläche 27 cm x 27 cm) gegossen. Zum Austesten des Additives in bezug auf andere Eigenschaften, z. B. als Zellregulator, kann natürlich auch ein anderer Stabilisator mitverwendet werden. Es entsteht ein Schaumstoff, von dem folgende Daten zur Beurteilung des eingesetzten Stabilisators gemessen werden:
1. Das Rücksacken des Schaumstoffes am Ende der Steigphase (in den nachfolgenden Tabellen mit Rückfall angegeben).
2. Die Zahl der Zellen pro Zentimeter Schaum wird unter einem Mikroskop ausgezählt.

Die mit den Schaumformulierungen A und B erhaltenen Ergebnisse sind in den Tabellen 2 bis 6 angegeben.

**Tabelle 2**

| Verschäumung nach Formulierung A | | | |
|---|---|---|---|
| Copolymer / Kategorie | Gew.-Teile | Rückfall [cm] | Zellen pro cm |
| 1 / - | 1,1 / 0,8 / 0,6 | 4,2 / 3,2 / 3,6 | 14 / 12 / 11 |
| 2 / + | 1,1 / 0,8 / 0,6 | 0,6 / 0,7 / 1,3 | 13 / 13 / 12 |
| 3 / + | 1,1 / 0,8 / 0,6 | 0,4 / 0,5 / 0,8 | 12 / 10 / 9 |
| 4 / - | 1,1 / 0,8 / 0,6 | 1 / 1,2 / 1,4 | 9 / 9 / 9 |
| 7 / + | 1,1 / 0,8 / 0,6 | 0,9 / 1,3 / 1,5 | 15 / 13 / 12 |
| 9 / + | 1,1 / 0,8 / 0,6 | 0,5 / 1 / 1,3 | 12 / 11 / 11 |

Die Ergebnisse zeigen, daß, gegenüber den nichterfindungsgemäßen Blockcopolymeren 1 und 4, die neuartigen Additivtypen 2 und 3 eine sonst nicht erhältliche Kombination von geringem Rückfall und guter Feinzelligkeit bewirken, wie sie auch z. B. bei der Verwendung als Stabilisatoren bei der PU-Herstellung mit unter Druck stehenden inerten Gasen gewünscht ist.

**Tabelle 3**

| Verschäumung nach Formulierung B | | | |
|---|---|---|---|
| Copolymer / Kategorie | Gew.-Teile | Rückfall [cm] | Zellen pro cm |
| 1 / - | 0,6 / 0,5 | 3,2 / Kollaps | 12 / -- |
| 2 / + | 0,6 / 0,5 | 1 / 1,5 | 13 / 13 |
| 3 / + | 0,6 / 0,5 | 1 / 1,2 | 14 / 13 |
| 4 / - | 0,6 / 0,5 | 1 / 1,3 | 9 / 9 |
| 7 / + | 0,6 / 0,5 | 1,7 / 2,5 | 14 / 13 |
| 9 / + | 0,6 / 0,5 | 1,9 / 3 | 13 / 13 |

Auch hier zeigt sich wiederum der Vorteil der neuen Produkte bei der Polyurethanverschäumung.

**Tabelle 4**

| Verschäumung nach Formulierung A | | | |
|---|---|---|---|
| Copolymer / Kategorie | Gew.-Teile | Rückfall [cm] | Zellen pro cm |
| 1 / - | 1,1 / 0,8 / 0,6 | 4,2 / 3,2 / 3,6 | 14 / 12 / 11 |
| 5 / - | 1,1 / 0,8 / 0,6 | 1,8 / 3,0 / 7 | 15 / 15 / 14 |
| 6 / + | 1,1 / 0,8 / 0,6 | 0,4 / 0,7 / 0,9 | 16 / 13 / 13 |
| 8 / + | 1,1 / 0,8 / 0,6 | 0,4 / 0,8 / 1,1 | 15 / 15 / 14 |

Auch bei dem Vergleich gleichzeitig end- und seitenständig modifizierter Strukturen zeigt sich wieder deutlich, wie bei den Substanzen aus Tabelle 2, der Vorteil der erfindungsgemäßen Produkte bei der Polyurethanverschäumung hinsichtlich der Kombination positiver Eigenschaften.

**Tabelle 5**

| Verschäumung nach Formulierung B | | | |
|---|---|---|---|
| Copolymer / Kategorie | Gew.-Teile | Rückfall [cm] | Zellen pro cm |
| 10 / + | 0,6 / 0,5 | 0,3 / 0 | 14 / 14 |
| 11 / + | 0,6 / 0,5 | 0 / 0,3 | 14 / 13 |
| 12 / + | 0,6 / 0,5 | 0 / 0,3 | 14 / 14 |
| 13 / + | 0,6 / 0,5 | 0,2 / 0,4 | 14 / 14 |
| 14 / - | 0,6 / 0,5 | 0,5 / 0,6 | 13 / 12 |

Der Vergleich der erfindungsgemäßen Copolymerpaare 10 und 11 bzw. 12 und 13 zeigt im Vergleich zu Copolymer 14 die Freiheit bezüglich der Polarität/Struktur bei der Auswahl der Kopplungskomponente.

Nachfolgend (siehe Tabelle 6) sind noch einige weitere, die Möglichkeiten des Bauprinzips erläuternde Strukturen (Copolymer 15 bis 17) gezeigt, die exemplarisch, aber nicht limitierend, für den Umfang der Erfindung gesehen werden sollen. Das Copolymerisat 17, im Vergleich zum nichterfindungsgemäßen Copolymerisat 18, verdeutlicht die Anwendbarkeit des Bauprinzips der Siloxankopplung auch auf Strukturen, bei denen die Siloxane über nichthydrolysestabile SiOC-Bindungen mit Polyethern verknüpft sind.

**Tabelle 6**

| Verschäumung nach Formulierung A | | | |
|---|---|---|---|
| Copolymer / Kategorie | Gew.-Teile | Rückfall [cm] | Zellen pro cm |
| 15 / + | 1,1 / 0,8 / 0,6 | 0,4 / 0,5 / 0,4 | 16 / 14 /15 |
| 16 / + | 1,1 / 0,8 / 0,6 | 0 / 0 / 0 | 15 / 14 / 11 |
| 17 / + | 1,1 / 0,8 / 0,6 | 0,1 / 0,2 / 0,4 | 13 / 12 /11 |
| 18 / - | 1,1 / 0,8 / 0,6 | 0,2 / 0,3 / 0,4 | 10 / 9 / 8 |

Die positiven Einflüsse des hier gezeigten Strukturprinzips lassen sich auch in sehr unterschiedlichen Anwendungen zeigen. So ergibt z. B. die Ausprüfung der Blockcopolymeren 19, 20 und 21 als Additive in der Hartschaumformulierung C die Vorzüge derartiger Strukturen als Hartschaumstabilisatoren (Ergebnisse siehe Tabelle 7). Der erfindungsgemäße Einsatz von Copolymer 19 führt im Gegensatz zu den nichterfindungsgemäßen Copolymeren 20 und 21 zu einer sonst nicht erhältlichen vorteilhaften Kombination von sehr guter Fließfähigkeit und geringen Oberflächen- und Innenstörungen.

| Schaumformulierung C | |
|---|---|
| | Gew.-Teile |
| Polyol (Zucker/Glyzerin gestartetes Polyol, OHZ: 500 - 520) | 96,5 |
| Wasser | 1 |
| tert. Amin | 2,5 |
| physik. Treibmittel | 30 |
| Stabilisator | 2 |
| rohes MDI (polymeres Diphenylmethan-4,4'-diisocyanat mit einer Isocyanatzahl von 31) | 148 |

Bei der Verschäumung von Formulierung C werden 91 g Polyol eingesetzt. Entsprechend werden die anderen Formulierungsbestandteile umgerechnet.

Die Polyurethanhartschäume werden nach üblichem Verfahren in einer Brettform mit den Maßen Länge 145 cm, Breite 14 cm, Dicke 3,5 cm hergestellt. Polyol, Wasser, Amin, Stabilisator und Treibmittel werden unter Rühren gut vermischt. Nach Zugabe des Isocyanats wird mit einem Glattrührer 6,5 Sek. bei 2500 U/Min. gerührt. Das Reaktionsgemisch wird nun in den unteren Teil der um 15° geneigten Brettform gefüllt. Um die Fließfähigkeit des Schaumes zu beurteilen, ist die Größe des Schaumansatzes so gewählt, daß die Brettform unterfüllt wird. Von dem gebildeten Hartschaumbrett werden folgende Eigenschaften zur Beurteilung des eingesetzten Stabilisators herangezogen:
1. Die Länge des Schaumbrettes als Maß für die Fließfähigkeit.
2. Oberflächenstörungen des erhaltenen Schaumbrettes (Abstufung der Beurteilung: kaum, schwach, mittel, stark, sehr stark).
3. Innenstörungen des aufgeschnitten Schaumbrettes, erkennbar als Löcher und Verdichtungen (Abstufung der Beurteilung: kaum, schwach, mittel, stark, sehr stark).

**Tabelle 7**

| Verschäumung nach Formulierung C | | | | |
|---|---|---|---|---|
| Copolymer / Kategorie | Gew.-Teile | Fließfähigkeit [cm] | Oberflächenstörungen | Innenstörungen |
| 19 / + | 2 | 133 | schwach - mittel | schwach - mittel |
| 20 / - | 2 | 129 | schwach - mittel | mittel - stark |
| 21 / - | 2 | 131 | mittel | schwach - mittel |

## Patentansprüche

1. Verwendung von verknüpften Siloxan-Blockcopolymeren der allgemeinen durchschnittlichen Formel 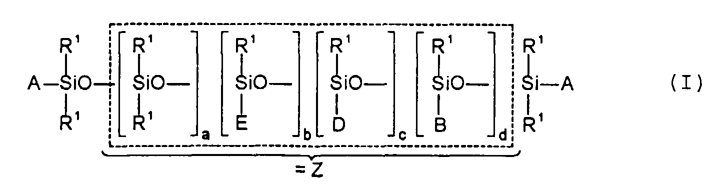 als Additiv bei der Herstellung von Polyurethanschaumstoffen, wobei die Reste und Indices folgende Bedeutungen haben:
A = Rest R¹, Rest E oder ein Rest der Formel IIa 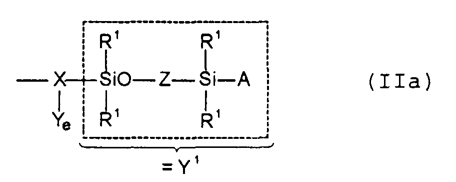 oder ein Rest der Formel IIb 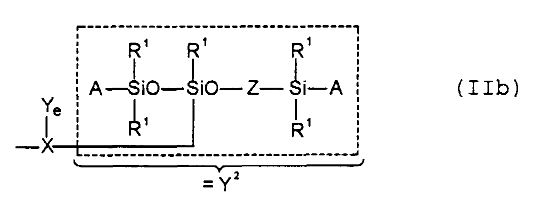
B = Rest der Formel IIa oder IIb,
Y = Rest Y¹ oder Rest Y²,
D = Rest der Formel 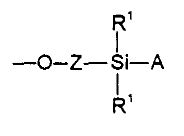
R¹ = ein gegebenenfalls substituierter Alkylrest mit 1 bis 30 Kohlenstoffatomen, ein gegebenenfalls substituierter Arylrest oder ein gegebenenfalls substituierter Alkarylrest, wobei jedoch mindestens 80 % der Reste R¹ Methylgruppen sind,
a hat einen Wert von 3 bis 200,
b hat einen Wert von 0 bis 50,
c hat einen Wert von 0 bis 10,
d hat einen Wert von 0 bis 5 und
e hat einen Wert von 0 bis 4,
wobei die Werte für a, b, c, d und e in den einzelnen Segmenten A, B, D und Z unterschiedlich sein können und mindestens ein Wert b oder c ungleich 0 ist,
E = ein Rest der allgemeinen Formel
-R²_{f}-O-(CₘH₂ₘO-)ₙR³
wobei
R² ein zweiwertiger Alkylenrest, der auch verzweigt sein kann, ist und
f einen Wert von 0 oder 1,
m einen Wert von durchschnittlich 2 bis 4,
n einen Wert von 0 bis 100 hat und
R³ ein Wasserstoffrest, ein gegebenenfalls substituierter Alkylrest mit 1 bis 6 Kohlenstoffatomen, ein Acylrest oder ein -O-CO-NH-R⁴-Rest ist, bei dem R⁴ ein gegebenenfalls substituierter Alkyl- oder Arylrest ist,
X = ein mehrwertiger organischer Rest.

2. Verwendung von verknüpften Siloxan-Blockcopolymeren der allgemeinen durchschnittlichen Formel gemäß Anspruch 1, wobei
X ein Verbrückungsglied der Formel 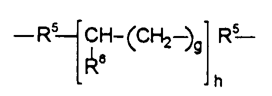 ist, wobei
R⁵ ein zweiwertiger Alkylenrest, der auch verzweigt sein kann, und
R⁶ ein Wasserstoffrest, ein gegebenenfalls verzweigter Alkylrest oder der Rest R⁵ ist,
g einen Wert von 0 bis 5 und
h einen Wert von 0 bis 3 haben,
oder der Formel 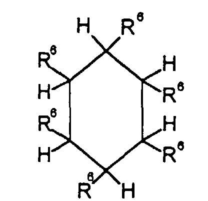 wobei R⁶ die Bedeutung wie zuvor hat,
jedoch mindestens zwei der Reste R⁶ die Reste R⁵ sind,
oder der Formel 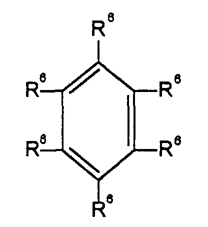 wobei R⁶ die Bedeutung wie zuvor hat,
jedoch mindestens zwei der Reste R⁶ die Reste R⁵ sind,
oder der Formel
-R⁵-O-(C_{m'}H_{2m'}O-)_{n'}R⁵-
wobei
R⁵ die Bedeutung wie zuvor,
m' einen Wert von 2 bis 4 und
n' einen Wert von 0 bis 20 haben,
oder der Formel
-R⁵-(CO-)ₖOCH₂-(CR⁷₂-)ᵢCH₂O-(CO-)ₖR⁵-
wobei
R⁵ die Bedeutung wie zuvor hat,
R⁷ ein Wasserstoffrest, ein Alkylrest, ein Hydroxyalkylrest oder der Rest -CH₂O-(CO-)ₖR⁵- ist und
i einen Wert von 0 bis 10 und
k einen Wert von 0 oder 1 haben,
oder der Formel 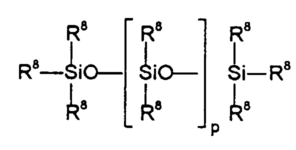 wobei
R⁸ ein Alkylrest, ein substituierter Alkylrest, ein Phenylrest oder der Rest R⁵ ist, jedoch mindestens zwei der Reste R⁸ die Reste R⁵ sind, und
p einen Wert von 0 bis 10 hat.

## Claims

1. Use of linked siloxane block copolymers of the general average formula 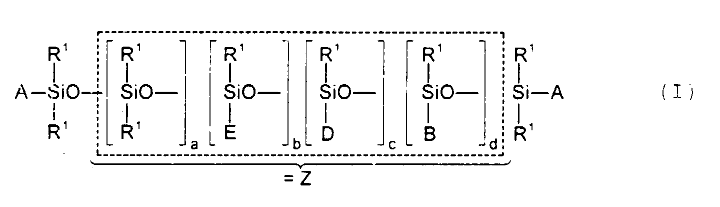 as additive in the production of polyurethane foams, where the radicals and indices have the following meanings:
A = radical R¹, radical E or a radical of the formula IIa 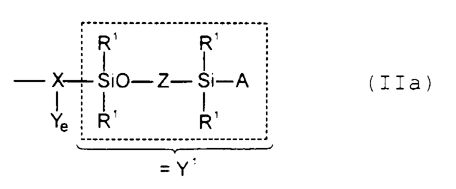 or a radical of the formula IIb 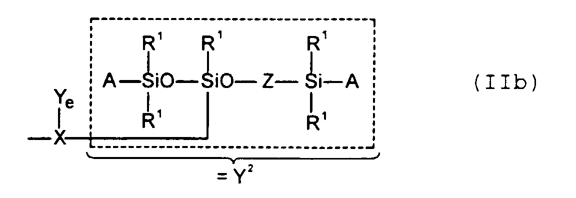
B = radical of the formula IIa or IIb,
Y = radical Y¹ or radical Y²,
D = radical of the formula 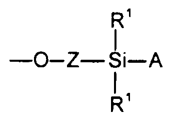
R¹ = an unsubstituted or substituted alkyl radical having from 1 to 30 carbon atoms, an unsubstituted or substituted aryl radical or an unsubstituted or substituted alkaryl radical, but with at least 80% of the radicals R¹ being methyl groups,
a is from 3 to 200,
b is from 0 to 50,
C is from 0 to 10,
d is from 0 to 5 and
e is from 0 to 4,
where the values of a, b, c, d and e in the individual segments A, B, D and Z can be different and at least one of b or c is not equal to 0,
E = a radical of the general formula
-R²_{f}-O-(CₘH₂ₘO-)ₙR³
where
R² is a divalent alkylene radical which may also
be branched and
f is 0 or 1,
m has an average value of from 2 to 4,
n is from 0 to 100 and
R³ is hydrogen, an unsubstituted or substituted
alkyl radical having from 1 to 6 carbon atoms, an acyl radical or a -O-CO-NH-R⁴ radical in which R⁴ is an unsubstituted or substituted alkyl or aryl radical,
X = a polyvalent organic radical.

2. Use of linked siloxane block copolymers of the general average formula as claimed in claim 1, where
X is a bridge of the formula 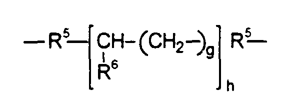 where
R⁵ is a divalent alkylene radical which may also
be branched and
R⁶ is hydrogen, a linear or branched alkyl radical or the radical R⁵ and
g is from 0 to 5 and
h is from 0 to 4,
or the formula 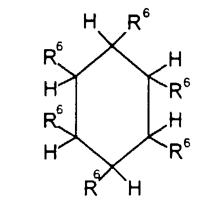 where R⁶ is as defined above,
but at least two of the radicals R⁶ are the radicals R⁵,
or the formula 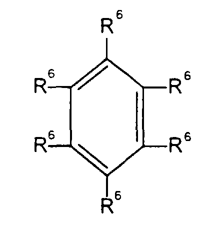 where R⁶ is as defined above,
but at least two of the the radicals R⁶ are the radicals R⁵,
or the formula
-R⁵-O-(C_{m'}H_{2m'}O-)_{n'}R⁵-
where
R⁵ is as defined above,
m' is from 2 to 4 and
n' is from 0 to 20,
or the formula
-R⁵-(CO-)ₖOCH₂-(CR⁷₂-)ᵢCH₂O-(CO-)ₖR⁵-
where
R⁵ is as defined above,
R⁷ is hydrogen, an alkyl radical, a hydroxyalkyl radical or the radical -CH₂O-(CO-)ₖR⁵- and
i is from 0 to 10 and
k is 0 or 1,
or the formula 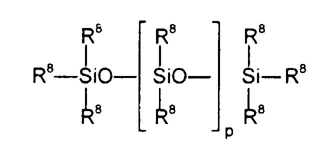 where
R⁸ is an alkyl radical, a substituted alkyl radical, a phenyl radical or the radical R⁵, but at least two of the radicals R⁸ are the radicals R⁵,
and
p is from 0 to 10.

## Revendications

1. Utilisation de copolymères blocs de siloxane réticulés de formule moyenne générale 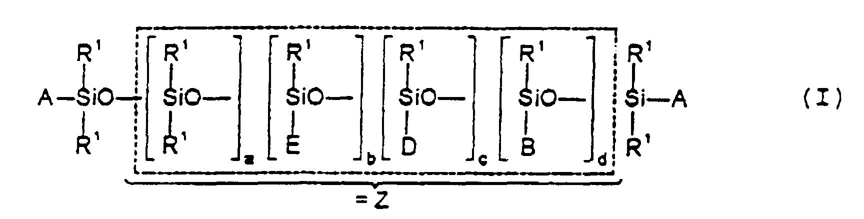 en tant qu'additif lors de la préparation de mousses de polyuréthane, où les radicaux et indices ont les significations suivantes :
A = radical R¹, radical E ou un radical de formule IIa 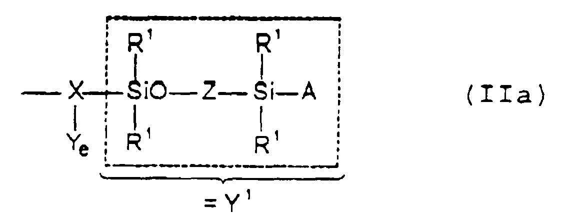 ou un radical de formule IIb 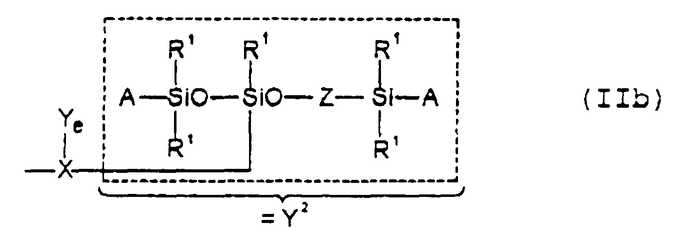
B = radical de formule IIa ou IIb,
Y = radical Y¹ ou Y²,
D = radical de formule 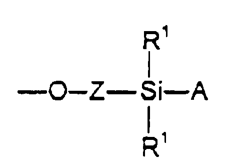
R¹ = un radical alkyle éventuellement substitué ayant de 1 à 30 atomes de carbone, un radical aryle éventuellement substitué ou un radical alkaryle éventuellement substitué, au moins 80% des radicaux R¹ étant toutefois des groupes méthyle,
a vaut de 3 à 200,
b vaut de 0 à 50,
c vaut de 0 à 10,
d vaut de 0 à 5 et
e vaut de 0 à 4,
les valeurs pour a, b, c, d et e dans les segments individuels A, B, D et Z pouvant être différentes et au moins une valeur b ou c étant différente de 0,
E = un radical de formule générale
-R²_{f}-O-(CₘH₂ₘO-)ₙR³
dans laquelle
R² est un radical alkylène bivalent qui peut également être ramifié,
f vaut 0 ou 1,
m vaut en moyenne de 2 à 4,
n vaut de 0 à 100 et
R³ est un radical hydrogène, un radical alkyle éventuellement substitué ayant de 1 à 6 atomes de carbone, un radical acyle ou un radical -O-CO-NH-R⁴-, dans lequel R⁴ est un radical alkyle ou aryle éventuellement substitué,
X = un radical organique polyvalent.

2. Utilisation de copolymères blocs de siloxane réticulés de formule moyenne générale selon la revendication 1, dans laquelle
X est un groupement de pontage de formule 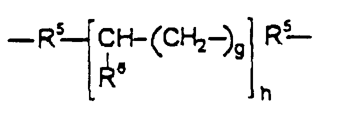 dans laquelle
R⁵ est un radical alkylène bivalent qui peut également être ramifié, et
R⁶ est un radical hydrogène, un radical alkyle éventuellement ramifié ou le radical R⁵,
g vaut de 0 à 5 et
h vaut de 0 à 3,
ou de formule 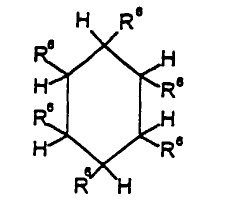 dans laquelle R⁶ est tel que défini ci-dessus,
au moins deux des radicaux R⁶ étant toutefois les radicaux R⁵,
ou de formule 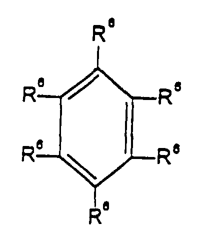 dans laquelle R⁶ est tel que défini ci-dessus,
au moins deux des radicaux R⁶ étant toutefois les radicaux R⁵,
ou de formule
-R⁵-(CO-)ₖOCH₂-(CR⁷₂-)ᵢCH₂O-(CO-)ₖR⁵-
dans laquelle
R⁵ est tel que défini ci-dessus,
m' vaut de 2 à 4 et
n' vaut de 0 à 20,
ou de formule
-R⁵-(CO-)ₖOCH₂(CR⁷₂-)ⱼCH₂O-(CO-)ₖR⁵-
dans laquelle
R⁵ est tel que défini ci-dessus,
R⁷ est un radical hydrogène, un radical alkyle, un radical hydroxyalkyle ou le radical -CH₂O-(CO-)ₖR⁵- et
i vaut de 0 à 10 et
k vaut de 0 à 1,
ou de formule 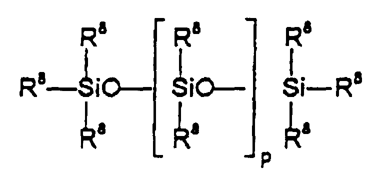 dans laquelle
R⁸ est un radical alkyle, un radical alkyle substitué, un radical phényle ou le radical R⁵, au moins deux des radicaux R⁸ étant toutefois les radicaux R⁵, et
p vaut de 0 à 10.
